# EUROPEAN PATENT APPLICATION

(11) **EP 0 953 593 A1**
(43) Date of publication of application: **03.11.1999**
(21) Application number: 99303142.6
(22) Date of filing: 22.04.1999
(51) Int. Cl.: C08J 5/10, C08K 9/06, C08L 21/00

(54) **Wire adhesion rubber products and methods of reducing cobalt adhesion promotors in such products**

(30) Priority: 27.04.1998 US 66710
(71) Applicant: CABOT CORPORATION, Boston, MA 02109-1806 (US)
(72) Inventor: Moneypenny, Harry G., 2314 EN Leiden (NL); Lanoye, Thierry, 58200 Cosne sur Loire (FR); Mahmud, Khaled, Natick, Massachusetts 01760 (US)
(74) Representative: Attfield, Donald James

(57) **Abstract**

A wire adhesion composition is provided which preferably exhibits properties which are comparable or superior to conventional wire adhesion compositions which contain a cobalt adhesion promotor. The wire adhesion composition of the present invention employs at least one multi-phase aggregate and at least one elastomer, with a reduced amount of cobalt adhesion promoter or without use of cobalt adhesion promoter. A method of reducing the amount of cobalt adhesion promoter required in a wire adhesion composition is also provided.

## Description

### Background Of The Invention

The present invention relates to wire adhesion products which can be used in tire manufacturing. More particularly, the present invention relates to rubber products wherein the amount of cobalt adhesion promoters can be reduced or eliminated.

Carbon blacks are widely used as pigments, fillers, and reinforcing agents in the compounding and preparation of rubber and other elastomeric compositions. Carbon blacks are particularly useful as reinforcing agents in the preparation of elastomeric compositions used in the manufacture of tires.

When constructing portions of a tire, it is generally desirable to employ elastomeric material in composite elements. For example, a steel cord can be used to reinforce elastomeric material in the breaker and carcass ply regions of the tire. Such elastomeric material is known as a wire breaker compound and a carcass ply compound. Excellent adhesion of the wire breaker compound and the carcass ply compound to a steel cord is desired. Furthermore, strands of high tensile steel wire can be used to reinforce elastomeric material used in the bead region of the tire. The beads can be a combination of multiple strands of high tensile copper, zinc or brass plated steel wire coated with elastomer material and formed into practically inextensible rings. Metallic reinforcing fabric can also be employed in the bead area. The beads have the function of securing the plies and retaining the inflated tire on the rim of the wheel under all conditions of loading. Excellent adhesion of the bead composition to the steel wire is also desired. Therefore, it is desirable to improve adhesion of these elastomeric compounds to the steel cord and steel wire. Various methods have been employed to improve adhesion.

A common method of improving adhesion involves the use of adhesion promoters in the elastomeric material. Adhesion promoters promote the adhesion of the elastomeric material to the wire. Commonly employed adhesion promoters include cobalt salts, such as cobalt neodecanoate and cobalt boro-acylate. Although the use of cobalt adhesion promoters provides desirable results, the cobalt adhesion promoters are relatively expensive.

Another method employed to improve adhesion of the elastomeric material to the wire is to coat the wire of the steel cord with an alloy material. For example, European Patent Application No. 0 669 409 A1 and U.S. Patent No. 5,338,620 relate to methods of coating steel wires with specific alloys. Such alloys can also impart desirable properties when drawing the wire. Even when the wire is coated with an alloy, cobalt adhesion promoters are still generally employed in the elastomeric material.

Adhesion of the wire to the elastomeric composition can be evaluated in terms of pull-out force and coverage according to ASTM D2229. In this test procedure, a length of brass plated steel cord is cured in a rubber compound block resulting in a fixed embedment length. The rubber block and steel cord are placed in the jaws of a Instron Tensile Tester. The force (N) to pull out the cord (P.O.F.) is measured and visual judgement is made about the amount of rubber coverage remaining on the wire. Complete rubber coverage or 100% indicates that the adhesion bond exceeded the tear strength of the rubber. No rubber coverage or 0% indicates failure completely in the reaction layer. For superior wire adhesion characteristics, a high pull out force and coverage are required.

Although a particular elastomeric composition may show promising results in terms of pull-out force or coverage initially, there is a tendency for deterioration to occur in these properties upon aging. Thus, maintaining properties upon aging is also desirable.

### SUMMARY OF THE PRESENT INVENTION

A feature of the present invention is to reduce the amount of cobalt adhesion promoters, or even eliminate the use of cobalt adhesion promoters, in elastomer compositions and composite articles which in the past have required such cobalt adhesion promoters.

A further feature of the present invention is to eliminate cobalt adhesion promoters from such elastomeric compositions while maintaining acceptable or improved properties as compared to elastomeric compositions containing cobalt adhesion promoters. Other features of the present invention will become apparent from the following description and claims.

The present invention is directed to wire adhesion compositions, such as wire breaker, carcass ply and wire or metallic fabric bead compositions, having desirable adhesion to wire and other desirable properties with reduced amounts of cobalt adhesion promoters or without use of cobalt adhesion promoters. The advantages of the present invention are obtainable by use of an aggregate comprising a silicon-containing species phase and a carbon phase, in the wire adhesion composition.

A variety of elastomers and formulations employing such elastomers are contemplated and disclosed. In particular, such formulations have the advantage of exhibiting desirable properties for a wire adhesion composition without requiring use of cobalt adhesion promoters which are commonly required in the wire adhesion compositions. In particular, it has been surprisingly discovered that the wire adhesion compositions of the present invention exhibit comparable or even better adhesion properties, particularly after aging, as compared to conventional wire adhesion compositions employing cobalt adhesion promoters. Also disclosed are methods for reducing the amount of cobalt adhesion promoter in a wire adhesion composition.

### DETAILED DESCRIPTION OF THE PRESENT INVENTION

A conventional wire breaker, carcass ply, or bead composition typically contains an elastomer, carbon black, an adhesion promotor, a processing oil, an antidegradent, and a vulcanization system including zinc oxide, stearic acid, sulfur, and an accelerator. Commonly employed adhesion promoters include cobalt containing compounds, such as cobalt neodecanoate, cobalt boro-acylate, cobalt stearate, cobalt naphthenate, cobalt abietate and the like. In order to obtain desirable properties in a wire breaker, carcass ply, or bead composition, the cobalt adhesion promoter is present in an amount of at least 0.05 to 0.25 phr of active cobalt per 100 phr by weight of elastomer. Use of such cobalt adhesion promoters is not particularly desirable in terms of cost of the overall wire adhesion composition.

In an embodiment of the present invention, acceptable wire adhesion compositions, preferably having desirable adhesion and other properties, may be obtained by compounding an elastomer with an aggregate comprising a carbon phase and a silicon-containing species phase, while reducing or eliminating the use of a cobalt adhesion promotor such as a cobalt salt. With the use of the aggregate of the present invention, the amount of cobalt-containing compounds can be reduced or eliminated in any rubber or elastomeric compound.

The multi-phase aggregates used in the present invention do not represent a mixture of discrete carbon black aggregates and discrete silica aggregates. Rather, the aggregates used in the present invention include at least one silicon-containing region which is part of the aggregate and can be located anywhere. In the aggregate, a silicon-containing species, including but not limited to oxides and carbides of silicon, may be distributed through at least a portion of the aggregate as an intrinsic part of the aggregate.

The aggregate (also identified as silicon-treated carbon black in the patent applications below), thus contains at least two phases, one of which is carbon and the other of which is a silicon-containing species. The silicon-containing species that is part of the aggregate is not attached to a carbon black aggregate like a silane coupling agent, but actually is part of the same aggregate as the carbon phase. The details of making the aggregates are further explained in U.S. Patent Application Serial Nos.: 08/446,141, filed May 22, 1995; 08/446,142, filed May 22, 1995; 08/528,895, filed September 15, 1995; and 08/750,017, filed November 22, 1996, which is a National Phase Application of PCT No. WO 96/37547, filed May 21, 1996; and 08/850,145, filed May 2, 1997, which is a continuation-in-part of U.S. Provisional Patent Application No. 60/027,099, filed September 25, 1996. All of these patents and applications are incorporated in their entireties herein by reference.

When the aggregate is examined under STEM-EDX, the silicon signal corresponding to the silicon-containing species is found to be present in individual carbon black aggregates. By comparison, for example, in a physical mixture of silica and carbon black, STEM-EDX examination reveals distinctly separate silica and carbon black aggregates.

The aggregates may be obtained by manufacturing carbon black in the presence of volatilizable and/or decomposable silicon-containing compounds, such as silicates, silanes, silicone polymers, and the like. Such carbon blacks are preferably produced in a modular or "staged, furnace carbon black reactor as described in the above-referenced patent applications.

The weight percent of silicon in the aggregate should range from about 0.1 % to about 25%, and preferably from about 0.5% to about 10%, and most preferably from about 2% to about 6%.

The multi-phase aggregate used in the present invention may be additionally compounded with one or more coupling agents to further enhance the properties of the elastomeric compound. Coupling agents can be used to increase modulus and therefore can increase pullout force. Coupling agents, as used herein, include, but are not limited to, compounds that are capable of coupling fillers such as carbon black or silica to an elastomer. Coupling agents useful for coupling silica or carbon black to an elastomer, are expected to be useful with the multi-phase aggregates. Useful coupling agents include, but are not limited to, silane coupling agents such as bis(3-triethoxysilylpropyl)tetrasulfane (Si-69), 3-thiocyanatopropyl-triethoxy silane (Si-264, from Degussa AG, Germany), g-mercaptopropyl-trimethoxy silane (A189, from Union Carbide Corp., Danbury, Connecticut); zirconate coupling agents, such as zirconium dineoalkanolatodi(3-mercapto) propionato-O (NZ 66A, from Kenrich Petrochemicals, Inc., of Bayonne, New Jersey); titanate coupling agents; nitro coupling agents such as N,N'-bis(2-methyl-2-nitropropyl)-1,6-diaminohexane (Sumifine 1162, from Sumitomo Chemical Co., Japan); and mixtures of any of the foregoing. The coupling agents may be provided as a mixture with a suitable carrier, for example X50-S which is a mixture of Si-69 and N330 carbon black, available from Degussa AG.

The coupling agent may be attached to the aggregate at any time, such as, prior to mixing or afterwards.

The wire adhesion compositions of the present invention may be prepared with the multi-phase aggregates by compounding with any elastomer, including those useful for compounding the carbon black. Any conventional method of forming elastomeric compositions, e.g., wire breaker, carcass ply, and bead compositions, can be used to make the compositions of the present invention.

Any suitable elastomer may be compounded with the multi-phase aggregate to provide the wire adhesion compositions of the present invention. Such elastomers include, but are not limited to, rubbers, homo- or co-polymers of 1,3-butadiene, styrene, isoprene, 2,3-dimethyl-1,3-butadiene, acrylonitrile, ethylene, and propylene. Preferably, the elastomer has a glass transition temperature (Tg) as measured by differential scanning colorimetry (DSC) ranging from about -120°C to about 0°C. Examples include, but are not limited to, styrene-butadiene rubber (SBR), natural rubber, polybutadiene, polyisoprene, and their oil-extended derivatives. Blends of any of the foregoing may also be used.

The preferred rubber for use with the present invention is natural rubber and its derivatives such as chlorinated rubber. Synthetic rubbers can be used such as: copolymers of from about 10 to about 70 percent by weight of styrene and from about 90 to about 30 percent by weight of butadiene such as a copolymer of 19 parts styrene and 81 parts butadiene, a copolymer of 30 parts styrene and 70 parts butadiene, a copolymer of 43 parts styrene and 57 parts butadiene and a copolymer of 50 parts styrene and 50 parts butadiene; polymers and copolymers of conjugated dienes such as polybutadiene, polyisoprene, polychloroprene, and the like, and copolymers of such conjugated dienes with an ethylenic group-containing monomer copolymerizable therewith such as styrene, methyl styrene, chlorostyrene, acrylonitrile, 2-vinyl-pyridine, 5-methyl 2- vinylpyridine, 5-ethyl-2-vinylpyridine, 2-methyl-5-vinylpyridine, alkyl-substituted acrylates, vinyl ketone, methyl isopropenyl ketone, methyl vinyl either, alphamethylene carboxylic acids and the esters and amides thereof such as acrylic acid and dialkylacrylic acid amide; also suitable for use herein are copolymers of ethylene and other high alpha olefins such as propylene, butene-1 and pentene-1. In addition to the examples mentioned above, the elastomer can be, but is not limited to, polymers (e.g., homopolymers, copolymers, and terpolymers) manufactured from 1,3 butadiene, styrene, isoprene, isobutylene, 2,3-dimethyl-1,3 butadiene, acrylonitrile, ethylene, propylene, and the like. It is preferred that these elastomers have a glass transition point (Tg), as measured by DSC, between -120°C and 20°C. Examples of such elastomers include poly(butadiene), poly(styrene-co-butadiene), and poly(isoprene).

The wire adhesion compositions of the present invention can therefore contain at least one elastomer and the multi-phase aggregate, and optionally at least one coupling agent, and/or various curing agents, processing aids, oil extenders, and antidegradents.

In making the elastomeric compositions, one or more curing agents such as, for example, sulfur, sulfur donors, activators, accelerators, and other systems used to effect vulcanization of the elastomer composition may be used.

The composition of the wire breaker, carcass ply, and bead components are typically based on 100 phr of elastomer by weight.

The wire adhesion composition of the present invention is advantageously employed as a matrix in which a plurality of wires or metallic cords each containing a plurality of wires are incorporated, thereby forming a composite element. The function of such composite elements is to give the structural element the necessary features in terms of structural strength and geometrical stability.

The wire breaker or belts are tread stiffening components. They are narrow layers of rubber coated steel cord material located immediately beneath the tread in the crown of the tire. They run circumferentially around a tire between the tread and the body plies. The belts, having high lateral stiffness, reduce tread movement as it contacts the road.

The plies are layers of rubber-coated cord fabric extending from bead to bead and are the reinforcing members of the tire. Cords may be of nylon, rayon, polyester, or plated steel, or the like. The plies are turned up around the beads, locking the bead into the assembly.

The wires used for this purpose, generally steel wires, can be obtained as a result of a drawing operation. The steel wire may have a coating of a metal alloy on its surface to promote various properties, such as drawing compatibility of the wire and/or adhesion of the elastomeric matrix to the wire itself. Typically, a brass plating having a copper content between 60 and 70%, preferably about 63% by weight of plating, can be employed for wire in the tire cord. Additionally, high tensile copper, zinc or brass plated steel wire can be used in the bead of the tire. The wire may contain cobalt, but preferably does not contain cobalt from the viewpoint of cost.

The present inventors have discovered that through a combination of the multi-phase aggregate and elastomer, the amount of cobalt adhesion promoter can be reduced or eliminated preferably without adversely affecting the properties required for a wire adhesion composition. Desirable properties of wire adhesion compositions can be obtained with substantially no cobalt adhesion promoters. By "substantially no", it is meant that no more than 0.1 phr of active cobalt per 100 phr by weight of elastomer is present in the composition, more preferably no more than 0.01 phr active cobalt per 100 phr by weight of elastomer.

While it is preferred that the use of cobalt be entirely or substantially eliminated, the amount of cobalt containing compounds can be at least reduced with the present invention. In particular, the amount of active cobalt contained in the compounds can be reduced by at least about 50%, more preferably, be reduced by at least about 90% and even more preferably be reduced by about 100% by weight of composition compared to a wire adhesion composition containing the same components but for the multi-phase aggregate to achieve substantially the same coverage and pull out force with superior compound fatigue and hysteresis characteristics. Generally, the amount of active cobalt that preferably can be used in the present invention is from about 0.01 to about 0.25 phr, and more preferably, from about 0 to about 0.05 phr.

The wire adhesion compositions of the present invention preferably exhibit comparable or better properties than conventional wire adhesion compositions containing a conventional carbon black and a cobalt adhesion promoter. The wire adhesion compositions preferably exhibit particularly advantageous properties after aging as compared with the conventional wire adhesion compositions.

In a wire adhesion composition containing conventional carbon black, removal of the cobalt adhesion promoter results in a significant drop in pull-out force and coverage. In contrast thereto, removal of the cobalt adhesion promoter from a wire adhesion composition in accordance with the present invention generally results in only small variation in pull-out force with no significant difference in coverage. In fact, the coverage is preferably comparable with, if not better than, the conventional wire adhesion composition containing the conventional carbon black and cobalt adhesion promoter.

Under aging conditions, the wire adhesion compositions of the present invention can exhibit many advantages over the conventional wire adhesion composition. Generally, the properties of a wire adhesion composition can be examined using conventional aging tests. Such tests include steam aging, cured humidity aging, green humidity aging, and salt bath aging.

In a wire adhesion composition employing a conventional carbon black, removal of the cobalt adhesion promoter generally results in a significant improvement in coverage after steam aging. Removal of the cobalt adhesion promoter from the wire adhesion composition of the present invention also can lead to a significant improvement in coverage. The coverage of the present invention, however, can be significantly better than that of the wire adhesion composition employing the conventional carbon black and cobalt adhesion promoter. The wire breaker composition of the present invention without any cobalt salt can demonstrate good retention of coverage with steam aging.

After cured humidity aging, the removal of the cobalt adhesion promoter from a conventional carbon black loaded wire adhesion composition results in an increase in coverage, which is marginal under the high severity cured humidity aging conditions. In contrast thereto, removal of the cobalt adhesion promoter from the wire adhesion compositions of the present invention preferably shows an improvement or has little effect on coverage. Furthermore, the wire adhesion compositions of the present invention preferably show significant improvement in coverage under high severity aging conditions. Further, the wire adhesion compositions without cobalt adhesion promoter of the present invention preferably show high pull-out force and coverage as compared to the wire adhesion compositions containing conventional carbon black and cobalt adhesion promoter under all aging conditions.

After green humidity aging, generally removal of the cobalt adhesion promoter from the conventional carbon black loaded wire adhesion composition provides only a slight improvement in coverage upon aging. There is no significant change in pull-out force. On the other hand, removal of the cobalt adhesion promoter from the wire adhesion composition of the present invention preferably gives only small variations in coverage upon green humidity aging. However, the coverage retention and level of the present invention is generally better, and the pull-out force can be higher as compared with the conventional wire adhesion composition containing conventional carbon black and cobalt adhesion promoter.

After heat aging, removal of the cobalt adhesion promoter has only a marginal effect on the coverage and pull-out force of the conventional carbon black loaded composition. Heat aging, however, significantly reduces coverage and pull-out force in all conventional carbon black loaded compositions with and without cobalt adhesion promoter.

Removal of the cobalt adhesion promoter from the wire adhesion compositions of the present invention generally has little effect on pull-out force and coverage after heat aging. The wire adhesion compositions of the present invention with and without cobalt adhesion promoter preferably show good retention of coverage with in some cases a small drop in pull-out force upon heat aging. However, the wire adhesion composition of the present invention generally without cobalt adhesion promoter shows significantly higher pull-out force and coverage in comparison to the conventional cobalt adhesion promoter loaded wire adhesion composition.

After salt bath aging, there is a tendency for a slight reduction in coverage upon removal of the cobalt adhesion promoter from the conventional carbon black loaded wire adhesion composition. In contrast, removal of the cobalt adhesion promoter from the wire adhesion compositions of the present invention has little effect on pull-out force or coverage. These values, however, are significantly higher than for the conventional wire adhesion composition including a cobalt adhesion promoter. Additionally, the wire adhesion compositions of the present invention with and without cobalt adhesion promoter generally show good retention of pull-out force and coverage upon salt bath aging.

The above discussed advantages of the wire adhesion compositions of the present invention as well as other advantages of the present invention, are illustrated in more detail in the following examples. The following examples are provided to illustrate the invention without limitation.

### EXAMPLES

### Preparation of the Multi-phase Aggregate

The method for preparing the multi-phase aggregates used in the examples is described in PCT Publication W096/37547, published November 28, 1996. The aggregates made in accordance with the teachings of PCT Publication W096/37547 have the characteristics set forth in Table 1 below.

**TABLE I**

| **Multi-Phase Aggregate** | | |
|---|---|---|
| Analytical Properties | CSDPF-A | CSDPF-B |
| % Silicon | 4.84 | 3.20 |
| CDBP, cc/100g | 101 | 103 |
| t-Area, m²/g | 122 | 88 |

### Preparation of Wire Adhesion Compositions

The wire adhesion compositions were prepared in two stages using a BR Banbury mixer under the following conditions:

### Stage 1

Start 38°C, 77 rpm, 40 psi, 70% fill factor, cooling water on at 100°C.

| | |
|---|---|
| 0 min. | Add polymer |
| 0.5 min. | Add 1/2 filler + smalls |
| 1.5 min. | Add 1/2 filler + oil |
| 3.5 min. | Sweep |
| 5.0 min. | Dump 140°C on batch. |

### Stage 2

| Mill 70°C | |
|---|---|
| 0 min. | Add masterbatch |
| 0.25 min. | Add sulfur + accelerator |
| 1.0 min. | Cross-cut every 20 seconds |
| 5.0 min. | 6 endrolls |
| 7.5 min. | Sheet off at tensile thickness |

The formulations set forth in Table II were prepared. The amounts are by weight per 100 parts by weight elastomer.

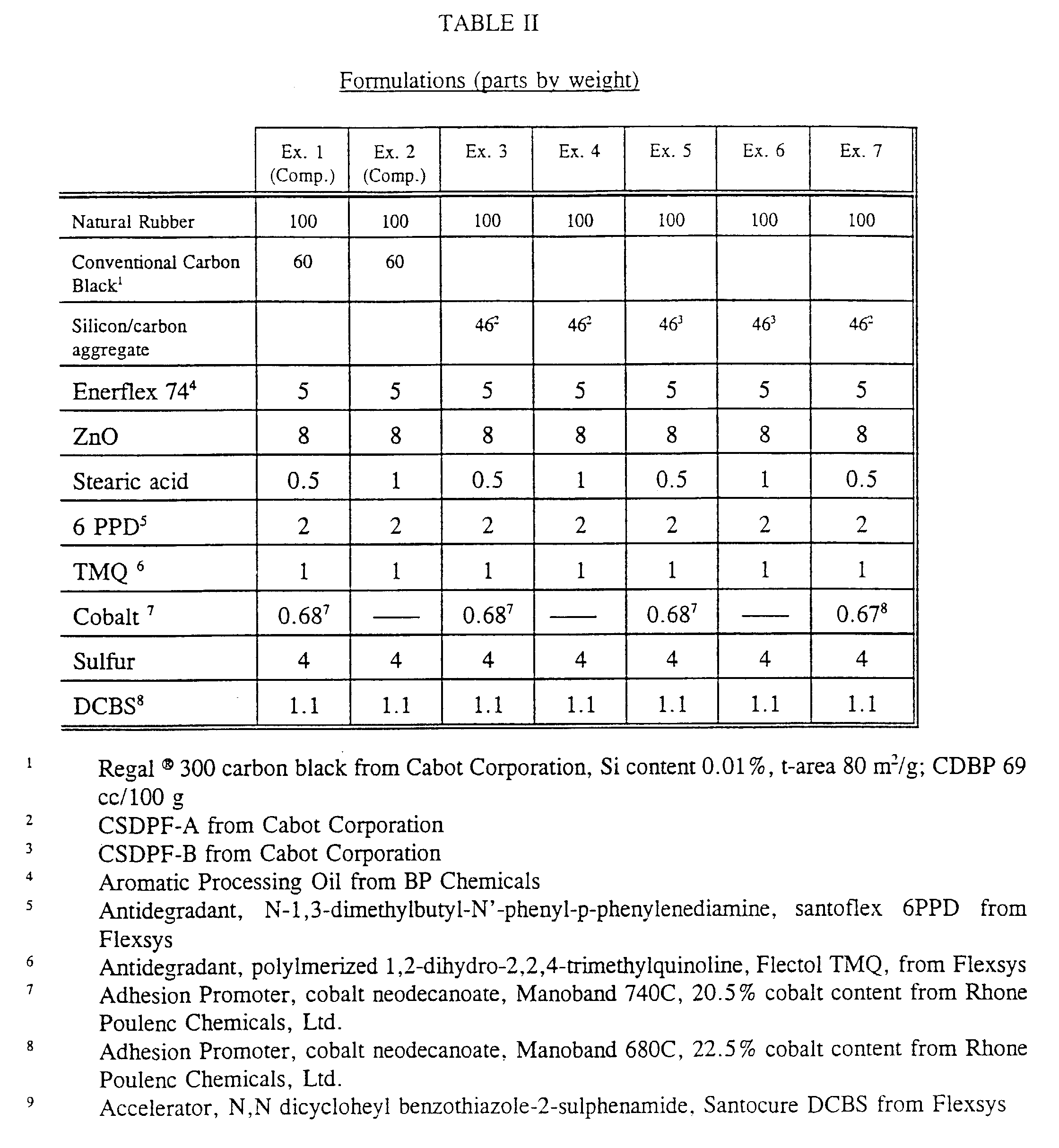

### Physical Properties

The physical properties of the formulations in Examples 1-7 were examined. The cure conditions for the physical properties test specimen preparation were 30 minutes at 150°C.

Dynamic testing was performed using a Rheometrics RDA II test machine in the torsion mode.

Discs of rubber 8 mm in diameter, were drilled out of rubber sheets 2.5 mm thick. A cyanoacrylate type adhesive (Locite 480) was used to bond the disc to the test Jig.

On each sample a strain sweep was performed under the following conditions:

| | |
|---|---|
| Frequency | 1 Hz |
| Temperature | 60°C |
| Amplitude range | +/- 0.1% to +/- 40% |
| Steps | 5 measurements per decade |

The physical properties are shown in Tables III and IV.

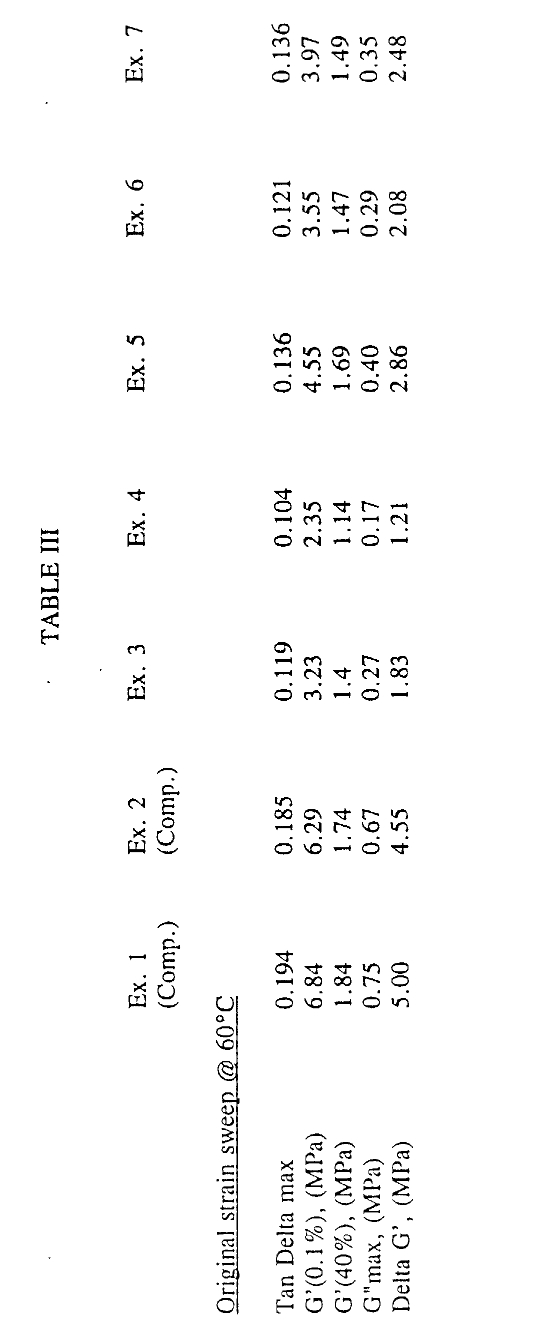

### Viscoelastic Properties, Strain Sweeps, at 60°C, Table III

All the multi-phase aggregate loaded compounds of the present invention have lower hysteresis than the conventional carbon black loaded compounds.

Removal of the cobalt salt from the compounds tended to reduce the dynamic stiffness at high strain and reduce hysteresis. An important property of a belt compound is its cut growth characteristics, which are influenced by the strain energy density at the belt edge, and the lower dynamic stiffness of the multi-phase aggregate loaded compounds should be beneficial here.

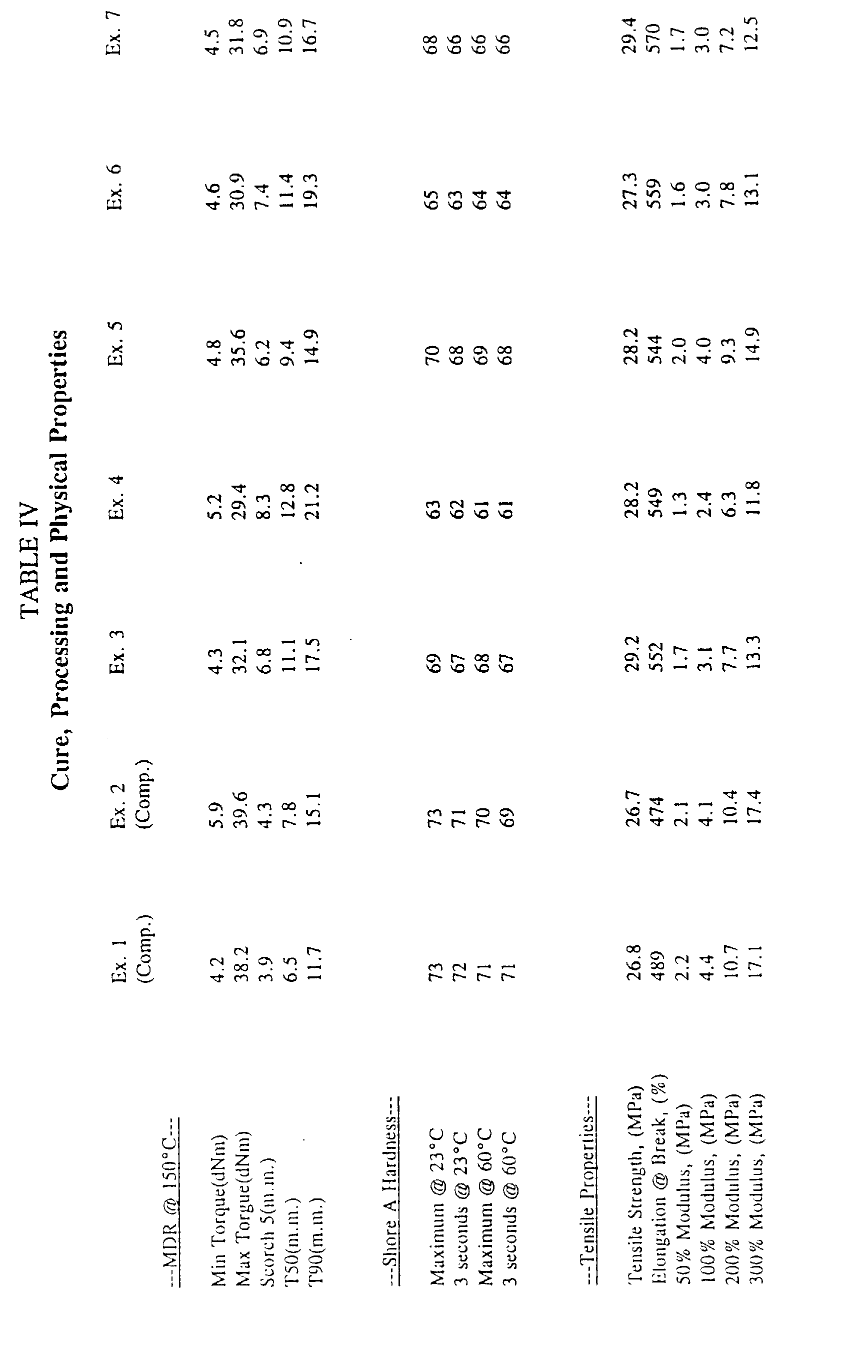

### Cure, Processing and Physical Properties

The multi-phase aggregate with cobalt salt containing compounds have slower curing rates, T90, than the conventional carbon black/cobalt salt containing compound. Removal of the cobalt salt from all compounds lead to slower cure rates.

The multi-phase aggregate loaded compounds were lower in Shore hardness than the conventional carbon black containing compounds. Removal of the cobalt salt lead to a further decrease in hardness.

The tensile strength, elongation to break, and 300% modulus of the multi-phase aggregate loaded compounds with or without cobalt salt are higher, longer, and lower respectively than that of the conventional carbon black containing compounds. For the multi-phase aggregate loaded compounds removal of the cobalt salt had little effect on tensile strength and elongation to break but lead to lower 300% modulus.

### Wire Adhesion Tests

The cure conditions used for wire adhesion test blocks are set forth in Table V.

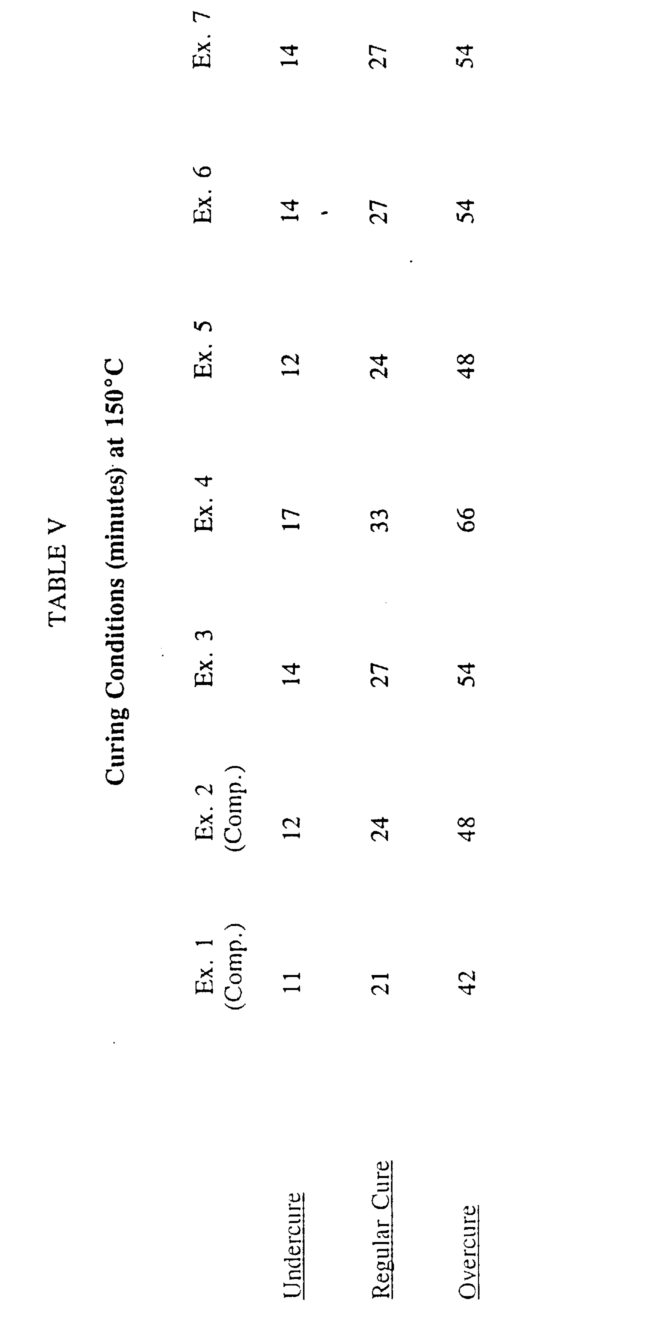

The pull out force (P.O.F) and coverage of the formulations of Examples 1-7 were examined. Lengths of brass plated steel cord, 63.5% copper with a thickness of 0.2 micron, of construction 3 * 0.20 + 6 * 0.35 (indicating an inner layer of three filaments of 0.20 mm diameter, surrounded by six filaments of 0.35 mm diameter) were cured in a rubber block resulting in a fixed embedment length of 12.7 mm. The rubber block and steel cord were placed in the jaws of an Instron tester and the force required to pull out the cord through a 2 mm diameter slit at a speed of 100 mm/min was determined. A visual judgement was also made about the amount of rubber coverage remaining on the wire. The results reported in the following tables are average of 12 values. The wire adhesion testing was based on the ASTM D2229 test procedure.

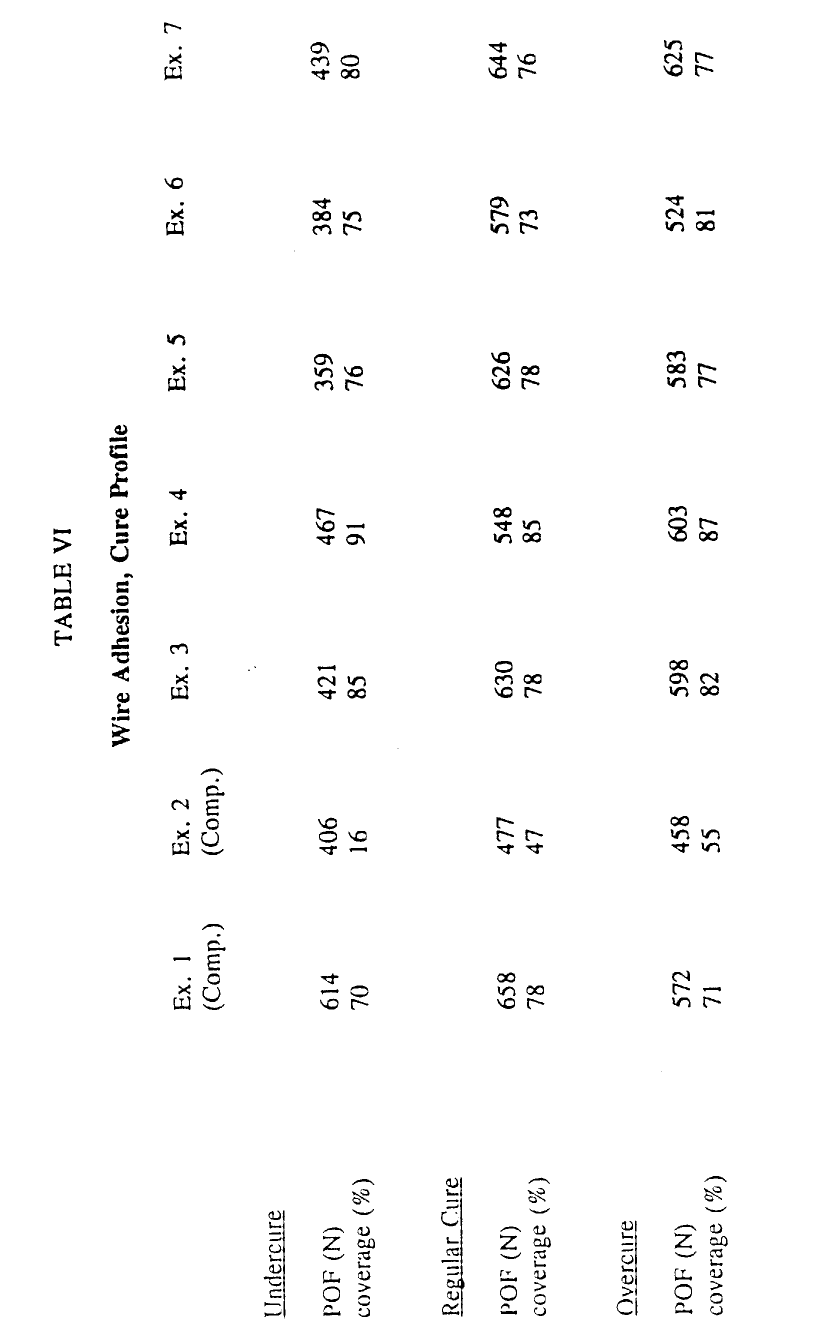

Under all cure conditions, the removal of the cobalt salt from the conventional carbon black containing compound results in a significant drop in pullout force and coverage.

Although removal of the cobalt salt from the multi-phase aggregate loaded compounds of the present invention results in some small variations in pullout force, there is no significant difference in coverage. In fact, the coverage is in-line with, if not better than, the conventional carbon black/cobalt salt containing compound.

The cobalt boro-acylate salt shows slightly higher pullout force than the cobalt neodecanoate salt in the multi-phase aggregate loaded compound.

Except for the conventional carbon black without cobalt salt compound, Example 2, all compounds show little variation in coverage as a function of cure.

### Wire Adhesion, After Steam Aging @ 120°C for 24 and 48 Hours

Steam aging tests were conducted at 120°C for 24 and 48 hours. The results are shown in Table VII.

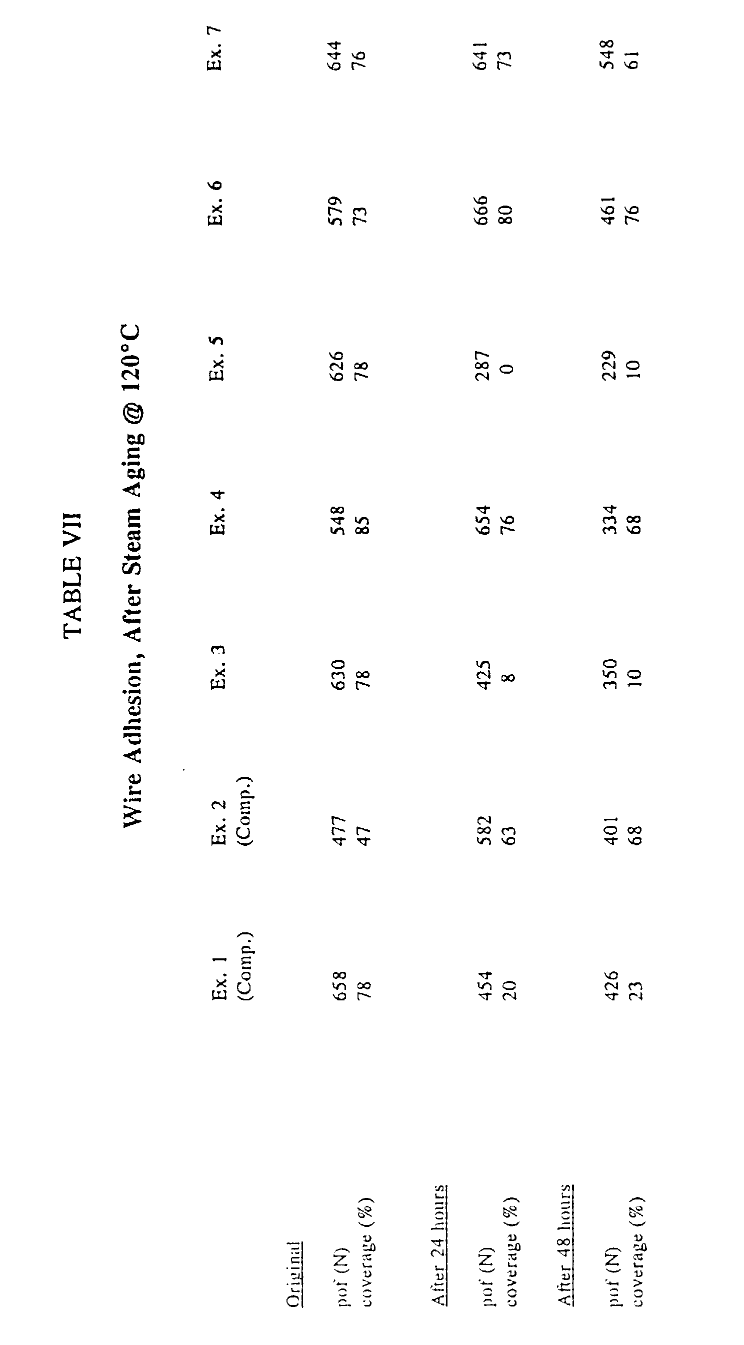

Under all aging conditions, the removal of the cobalt salt from the conventional carbon black containing compounds results in a significant improvement in coverage.

Removal of the cobalt salt from the multi-phase aggregate loaded compounds of the present invention also led to a significant improvement in coverage. The coverage was significantly better than that of the conventional carbon black/cobalt salt loaded compound.

The multi-phase aggregate formulations of the invention without cobalt salt-containing compounds demonstrated good retention of coverage with aging.

The cobalt boro-acylate salt of Example 7 showed significantly better coverage than the cobalt neodecanoate salt.

### Wire Adhesion, After Cured Humidity Aging for 3 and 7 Days @ 93°C, 95% R.H.

The formulation of Examples 1-7 were subjected to cured humidity aging for 3 and 7 days at 93°C, 95% R.H. The results are shown in Table VIII.

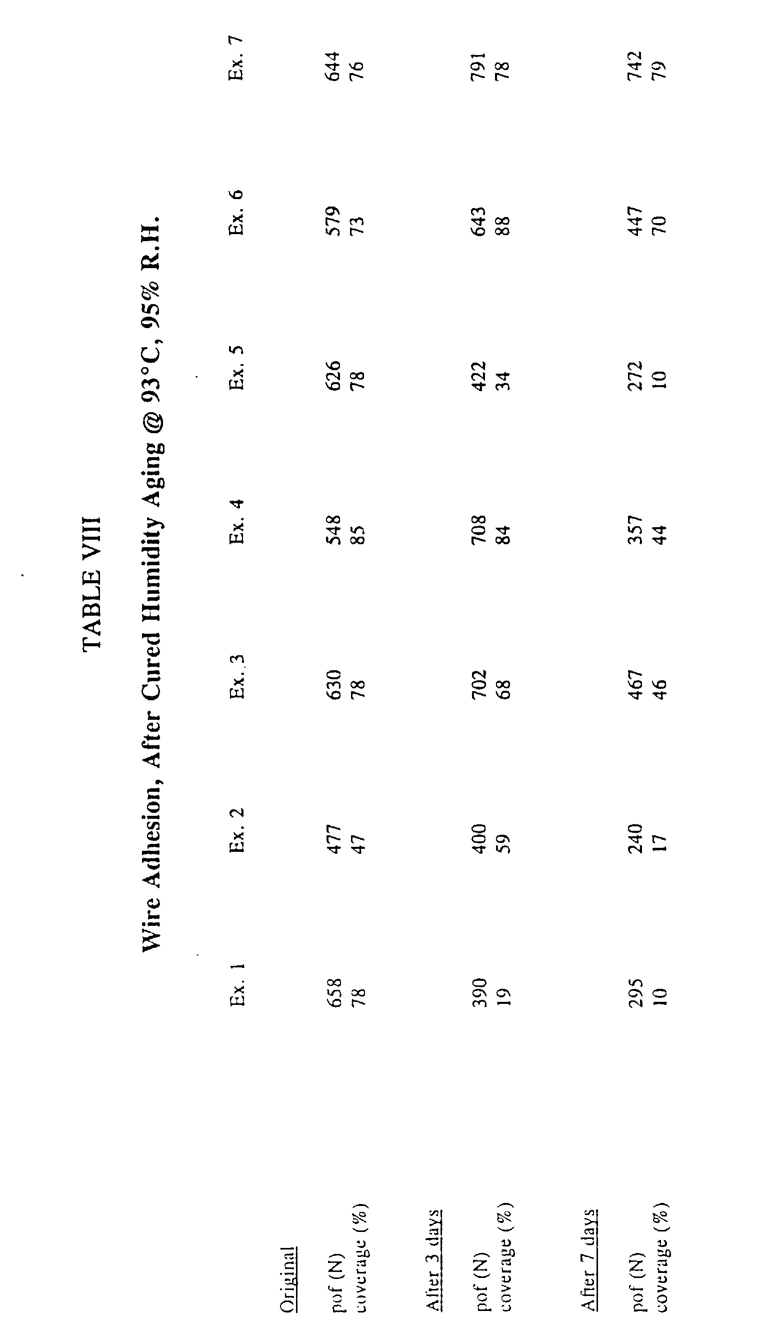

The removal of the cobalt salt from the conventional carbon black loaded compound resulted in a significant increase in coverage at the low severity aging condition, but only a marginal increase under the high severity aging condition.

Removal of the cobalt salt from the multi-phase aggregate CSDPF-A loaded compounds of the present invention had little effect on coverage, however with the multi-phase aggregate, CSDPF-B, there is a significant improvement in coverage under the high severity aging conditions. In all cases the multi-phase aggregate loaded compounds without cobalt salt all showed higher pull-out force and coverage to those of the conventional carbon black/cobalt salt containing compounds under all aging conditions.

The multi-phase aggregate without cobalt salt containing compounds showed the best retention of coverage with aging.

Under the most severe aging conditions cobalt boro-acylate salt showed higher pullout force and coverage than the cobalt neodecanoate salt in the multi-phase aggregate loaded compound.

### Wire Adhesion, After Green Humidity Aging for 1 and 2 Weeks @ 35°C, 95% R.H.

The formulations of Examples 1-7 were subjected to green humidity aging for 1 and 2 weeks at 35°C, 95% R.H. The results are shown in Table IX.

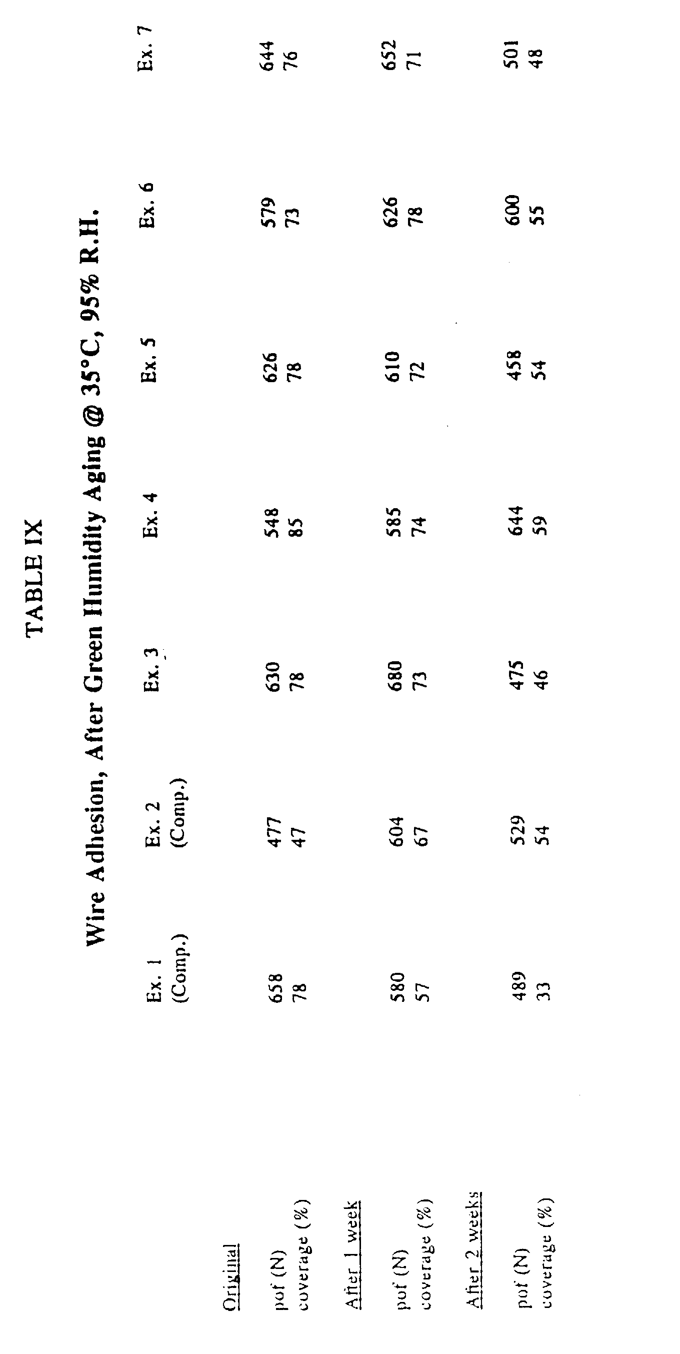

Removal of the cobalt salt from the conventional carbon black loaded compound gave only a slight improvement in coverage upon aging. There was no significant change in pullout force.

Removal of the cobalt salt from the multi-phase aggregate loaded compounds gave only small variations in coverage upon aging. However the coverage retention and level was better, and the pullout force slightly higher than for the conventional carbon black/cobalt salt containing compound.

There were no significant differences between the cobalt salts in the multi-phase aggregate loaded compounds.

### Wire Adhesion, After Heat Aging for 1 and 2 Weeks @ 100°C

The formulations of Examples 1-7 were subjected to heat aging for 1 and 2 weeks at 100°C. The results are shown in Table X.

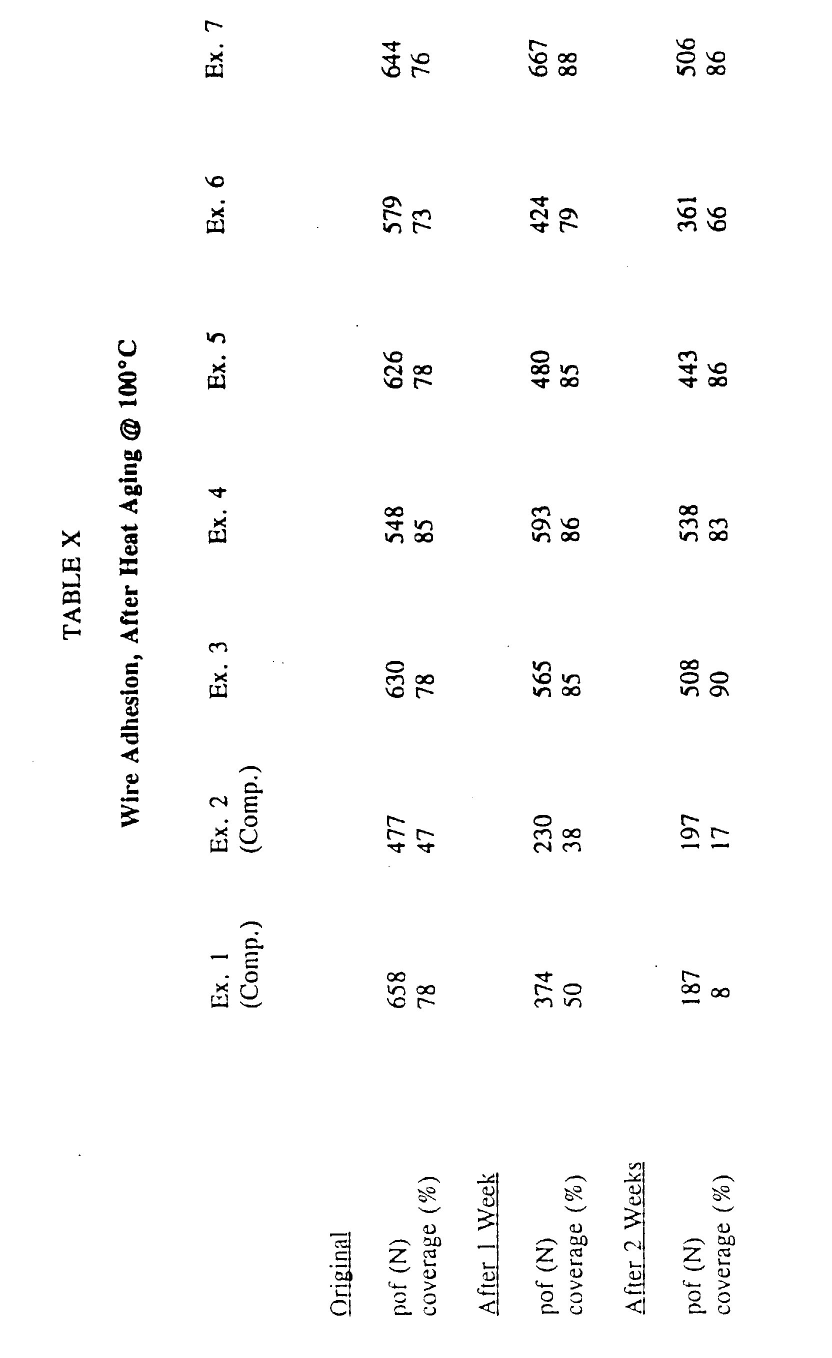

Removal of the cobalt salt had only a marginal effect on the coverage and pullout force of the conventional carbon black loaded compound. Aging, however, significantly reduced coverage and pullout force in all the conventional carbon black loaded compounds with or without cobalt salt.

Removal of the cobalt salt from the multi-phase aggregate compounds had little effect on pullout force and coverage. These compounds with or without cobalt salt showed upon aging, good retention of coverage with, normally, a slight drop in pullout force. However, the multi-phase aggregate without cobalt loaded compounds showed significantly higher pullout force and coverage in comparison to the conventional carbon black/cobalt salt containing compound.

There were no significant differences between the cobalt salts in the multi-phase aggregate loaded compounds.

### Wire Adhesion, After Salt (20% NaCl) Bath Aging for 2 and 3 Weeks

The formulations of Examples 1-7 were subjected to salt (20% NaCl) bath aging for 2 and 3 weeks. The results are shown in Table XI.

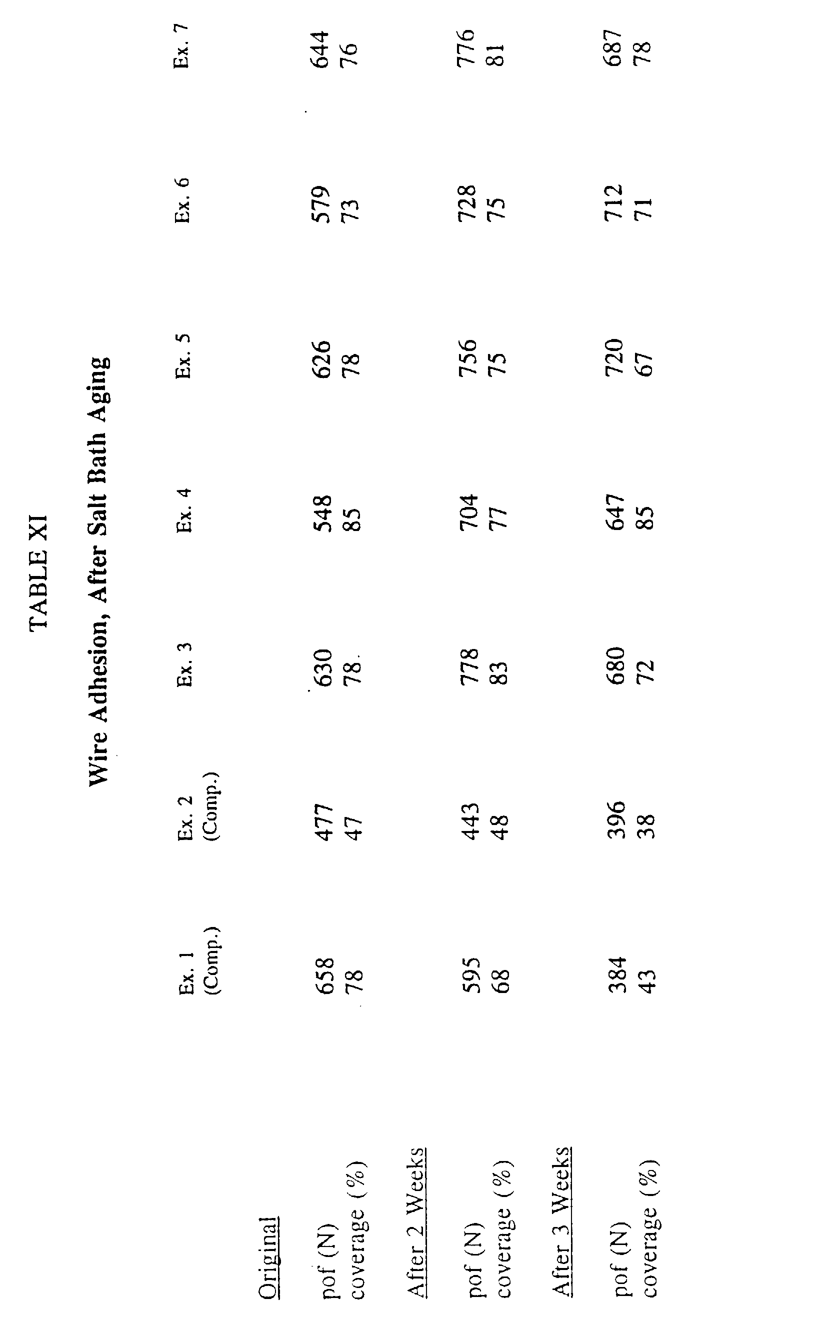

There was a tendency for a slight reduction in coverage on the removal of the cobalt salt from the conventional carbon black containing compound.

Removal of the cobalt salt from the multi-phase aggregate loaded compounds has little effect on pullout force or coverage. These values are significantly higher than for the conventional carbon black with cobalt salt containing compound. Additionally the multi-phase aggregate loaded compounds with or without cobalt salt show good retention of pullout force and coverage upon aging.

There were no significant differences between the cobalt salts in the multi-phase aggregate loaded compound.

In comparison to the reference adhesion composition containing conventional carbon black and a cobalt salt, compounds loaded with the multi-phase aggregates and no cobalt salt had overall superior aged wire adhesion performance with respect to retention of properties, coverage, and pull-out force. This was an important advantage in that the cobalt salt is extremely expensive.

The present invention has of necessity been discussed herein by reference to certain specific methods and materials. The enumeration of these methods and materials was merely illustrative, and in no way constitutes any limitation on the scope of the present invention. In view of the present invention, it is to be expected that those skilled in the art may discern and practice variations of or alternatives to the specific teachings provided herein, without departing from the scope of the present invention.

## Claims

1. A composite article comprising at least one wire embedded in a wire adhesion composition, the wire adhesion composition comprising at least one elastomer, at least one aggregate comprising a carbon phase and a silicon-containing species phase, and substantially no cobalt adhesion promoter.

2. The composite article of claim 1, wherein the wire adhesion composition contains no more than 0.25 phr of active cobalt per 100 phr by weight of the elastomer.

3. The composite article of claim 1, wherein the wire adhesion composition contains no cobalt adhesion promoter.

4. The composite article of claim 1, wherein said wire adhesion composition exhibits at least equivalent pull-out force and coverage after aging as compared to an unaged wire breaker composition containing conventional carbon black and a cobalt adhesion promoter.

5. The composite article of claim 1, wherein said silicon-containing species phase contains from about 0.1% to about 25% silicon, by weight of said aggregate.

6. The composite article of claim 5, wherein said silicon-containing species phase contains from about 0.5% to about 10% silicon, by weight of said aggregate.

7. The composite article of claim 1, wherein the elastomer comprises natural rubber, styrene butadiene rubber, polyisoprene, NBR, chloroprene, EPDM copolymers or blends thereof.

8. The composite article of claim 1, wherein the elastomer is natural rubber.

9. The composite article of claim 1, wherein the at least one wire contains substantially no cobalt adhesion promoter.

10. A method of reducing the amount of a cobalt adhesion promoter required in a wire adhesion composition, comprising preparing the wire adhesion composition with at least one elastomer and at least one aggregate comprising a carbon phase and a silicon-containing species phase.

11. The method of claim 10, wherein the wire adhesion composition is prepared in the absence of a cobalt adhesion promoter.

12. The method of claim 11, further comprising the steps of embedding at least one wire in the wire adhesion composition and then curing the wire adhesion composition.

13. The method of claim 10, wherein said silicon-containing species phase contains from about 0.1 % to about 25% silicon, by weight of said aggregate.

14. The method of claim 13, wherein said silicon-containing species phase contains between about 0.5% to about 10% silicon, by weight of said aggregate.

15. The method of claim 10, wherein the elastomer comprises natural rubber, styrene butadiene rubber, polyisoprene, NBR, chloroprene, EPDM copolymers or blends thereof.

16. The method of claim 10, wherein the elastomer is natural rubber.

17. A method of preparing a wire adhesion composition, comprising
compounding at least one elastomer and at least one aggregate comprising a carbon phase and a silicon-containing species phase in the absence of a cobalt adhesion promoter.

18. The method of claim 17, further comprising the step of embedding at least one wire in the wire adhesion composition.

19. The method of claim 18, further comprising the step of curing the wire adhesion composition after said at least one wire is embedded therein.

20. A composite article comprising at least one wire embedded in a wire adhesion composition, the wire adhesion composition comprising at least one elastomer and at least one aggregate comprising a carbon phase and a silicon-containing species phase.
